# EUROPÄISCHE PATENTSCHRIFT

(11) **EP 4 111 604 B1**
(45) Veröffentlichungstag und Bekanntmachung des Hinweises auf die Patenterteilung: **08.04.2026**
(21) Anmeldenummer: 21703595.5
(22) Anmeldetag: 01.02.2021
(51) Int. Cl.: H04B 10/116

(54) **VERFAHREN UND SYSTEM ZUR ÜBERTRAGUNG VON DATEN**
METHOD AND SYSTEM FOR TRANSMITTING DATA
PROCÉDÉ ET SYSTÈME DE TRANSMISSION DE DONNÉES

(30) Priorität: 24.02.2020 DE 102020001178
(43) Veröffentlichungstag der Anmeldung: 04.01.2023
(73) Patentinhaber: SEW-EURODRIVE GmbH & Co. KG, 76646 Bruchsal (DE)
(72) Erfinder: HAMMANN, Marcel, 67454 Haßloch (DE); HUA, Zhidong, 76646 Bruchsal (DE); SCHÄFER, Thomas, 76689 Karlsdorf-Neuthard (DE); SCHMIDT, Josef, 76676 Graben-Neudorf (DE)
(86) Internationale Anmeldenummer: PCT/EP2021/025038
(87) Internationale Veröffentlichungsnummer: WO 2021/170291

(56) Entgegenhaltungen:
- DE-A1- 102010 031 411
- DE-B3- 102018 006 988
- US-A1- 2005 169 392
- US-A1- 2019 132 000

## Beschreibung

Die vorliegende Erfindung betrifft ein Verfahren zur Übertragung von Daten von einem Sender zu einem Empfänger. Die Erfindung betrifft auch ein System zur Übertragung von Daten, welches einen Sender zum Senden von Daten und einen Empfänger zum Empfangen von Daten umfasst.

Aus dem Dokument DE 10 2018 006 988 B3 sind ein System und ein Verfahren zur Datenübertragung mittels sichtbarem Licht bekannt. Das System weist dabei einen Empfänger mit einem Bildsensor, dessen lichtsensitive Fläche zeilenweise abgetastet wird, und einen Sender mit einem steuerbaren Leuchtmittel, welches moduliertes Licht abstrahlt, auf. Durch Ausnutzug des Rolling-Shutter-Effekts des Bildsensors wird eine erhöhte Datenübertragungsrate erzielt.

Bei einer bitweisen Übertragung von Daten von einem Sender zu einem Empfänger können einzelne Bits fehlerhaft übertragen werden. Um derartige Fehler zu erkennen sind fehlererkennende Übertragungsverfahren bekannt. Ferner sind fehlerkorrigierende Übertragungsverfahren bekannt. Dabei werden in einem Telegramm zusätzlich zu den Datenbits redundante Paritätsbits übertragen. Ursache einer fehlerhaften Datenübertragung ist beispielsweise ein stochastisches Rauschen.

Bei einer bitweisen Übertragung von Daten von einem Sender zu einem Empfänger können auch einzelne Bits verloren gehen, beispielsweise bei der Übertragung von Daten als Lichtstrom von einer LED als Sender zu einer Kamera mit einem Bildsensor als Empfänger. Der Bildsensor arbeitet mittels des Rolling-Shutter-Effekts und weist abwechselnd je eine Aufnahmezeit und eine Pausenzeit auf. Während der Aufnahmezeit ist eine Aufnahme eines Bildes möglich, während der Pausenzeit ist eine Aufnahme eines Bildes nicht möglich. Daten, die während der Pausenzeit zu dem Empfänger übertragen werden, können somit nicht empfangen werden, sondern gehen verloren.

Das Dokument US 2013/0051266 A1 offenbart ein Verfahren und ein System zur Übertragung von Daten von Sendern zu Empfängern basierend auf dem Standard IEEE802.16.

Das Dokument US 2006/01 71418 A1 offenbart ein Verfahren und eine Vorrichtung zur Übertragung von Datenpaketen von Sendern zu Empfängern über einen Übertragungskanal.

Aus der US 2019/0132000 A1 ist ein Verfahren zur Übertragung von Daten von einem Sender zu einem Empfänger bekannt. Dabei wird ein Datenframe als Lichtstrom von einer Lichtquelle zu einer optischen Kamera übertragen.

Aus der US2005/0169392 A1 und der DE 10 2010 031 411 A1 sind ebenfalls Verfahren zur Übertragung von Daten von einem Sender zu einem Empfänger bekannt.

Der Erfindung liegt die Aufgabe zugrunde, ein Verfahren und ein System zur Übertragung von Daten von einem Sender zu einem Empfänger weiter zu bilden.

Die Aufgabe wird durch ein Verfahren zur Übertragung von Daten mit den in Anspruch 1 angegebenen Merkmalen gelöst. Vorteilhafte Ausgestaltungen und Weiterbildungen sind Gegenstand der Unteransprüche. Die Aufgabe wird auch durch ein System zur Übertragung von Daten mit den in Anspruch 9 angegebenen Merkmalen gelöst. Vorteilhafte Ausgestaltungen und Weiterbildungen sind Gegenstand der Unteransprüche.

Gemäß dem erfindungsgenmäßen Verfahren zur Übertragung von Daten von einem Sender zu einem Empfänger wird von dem Sender mindestens ein Datenframe gesendet, welcher eine Mehrzahl von Datenpaketen umfasst. Dabei umfasst jedes Datenpaket eine Paketnummer und ein Telegramm, wobei die Paketnummern der Datenpakete des mindestens einen Datenframes voneinander unterschiedlich sind, und wobei die Telegramme der Datenpakete des mindestens einen Datenframes identisch sind.

Die Telegramme enthalten dabei die zu übertragenden Daten. Da innerhalb einer Datenframes mehrere identische Telegramme übertragen werden, werden die besagten Daten redundant übertragen. Wenn bei der Übertragung eines Datenframes ein Telegramm oder ein Teil eines Telegramms verloren geht, so werden die in diesem Telegramm enthaltenen Daten zusätzlich in anderen Telegrammen des Datenframes übertragen und sind somit für den Empfänger verfügbar. Wenn der Empfänger eine Pausenzeit aufweist, so sollte eine Zeitspanne, in welcher ein Datenpaket gesendet wird, mindestens so lang wie die besagte Pausenzeit sein. Mittels des erfindungsgenmäßen Verfahrens sind Daten, die beispielsweise während einer Pausenzeit des Empfängers von dem Sender zu dem Empfänger übertragen werden und daher verloren gehen, trotzdem für den Empfänger verfügbar. Ein Datenverlust bei der Übertragung von Daten ist somit vorteilhaft vermieden und eine Reichweite der Datenübertragung ist erhöht.

Erfindungsgemäß wird von dem Empfänger eine Mehrzahl von Datenpaketen des mindestens einen Datenframes vollständig empfangen. Somit ist sichergestellt, dass mehrere Telegramme mit den gleichen Daten von dem Empfänger empfangen werden, und dass kein Datenverlust auftritt. Die Zuverlässigkeit der Datenübertragung ist somit erhöht.

Erfindungsgemäß werden die Telegramme der vollständig empfangenen Datenpakete des mindestens einen Datenframes zu einer Telegrammsumme des mindestens einen Datenframes addiert. Dadurch wird eine größere Signalamplitude erhalten, und ein Signal-Rausch-Abstand der zu übertragenden Daten wird vorteilhaft erhöht. Falls durch Rauschen einzelne Datenbits eines einzelnen Telegramms fehlerhaft sind, so werden derartige Fehler durch die Summenbildung vorteilhaft reduziert oder eliminiert.

Erfindungsgemäß wird von dem Empfänger eine Anzahl der vollständig empfangenen Datenpakete des mindestens einen Datenframes ermittelt, und die Telegrammsumme des mindestens einen Datenframes wird durch die ermittelte Anzahl dividiert. Falls einzelne Datenpakete von Datenframes nicht empfangen wurden, so enthalten die Telegrammsummen der einzelnen Datenframes jeweils eine unterschiedliche Anzahl von Telegrammen. Durch die Division durch die ermittelte Anzahl erfolgt eine Normierung der Telegrammsummen.

Erfindungsgemäß wird dabei jedes der Datenpakete in einer gleichen Zeitspanne gesendet.

Gemäß einer vorteilhaften Weiterbildung der Erfindung werden die Paketnummern der vollständig empfangenen Datenpakete des mindestens einen Datenframes zu einer Nummernsumme des mindestens einen Datenframes addiert. Wenn alle Datenpakete des Datenframes von dem Empfänger empfangen werden, so ist die Nummernsumme eine bekannte Konstante. Wenn die Nummernsumme von dieser Konstanten abweicht, so ist aus der Abweichung ermittelbar, welches der Datenpakete des Datenframes nicht empfangen worden ist.

Gemäß einer vorteilhaften Ausgestaltung der Erfindung sind die Paketnummern der Datenpakete des mindestens einen Datenframes fortlaufend. Dadurch ist eine Ermittlung, welches der Datenpakete des übertragenen Datenframes nicht empfangen worden ist, vereinfacht.

Gemäß einer vorteilhaften Weiterbildung der Erfindung umfasst jedes Datenpaket des mindestens einen Datenframes eine Startsequenz, welche mindestens ein Startbit aufweist. Dabei sind die Startsequenzen der Datenpakete des mindestens einen Datenframes identisch. Die Startsequenz erleichtert es dem Empfänger, den Anfang eines Datenpakets innerhalb eines Datenframes zu erkennen.

Vorzugsweise wird die Startsequenz eines Datenpakets zeitlich vor der Paketnummer des Datenpakets und/oder zeitlich vor dem Telegramm des Datenpakets gesendet. Dies erleichtert dem Empfänger zusätzlich die Erkennung des Anfangs eines Datenpakets innerhalb eines Datenframes.

Gemäß einer vorteilhaften Weiterbildung der Erfindung umfasst jedes Datenpaket des mindestens einen Datenframes eine Stopsequenz, welche mindestens ein Stopbit aufweist. Dabei sind die Stopsequenzen der Datenpakete des mindestens einen Datenframes identisch. Die Stopsequenz erleichtert es dem Empfänger, das Ende eines Datenpakets innerhalb eines Datenframes zu erkennen.

Vorzugsweise wird die Stopsequenz eines Datenpakets zeitlich nach der Paketnummer des Datenpakets und/oder zeitlich nach dem Telegramm des Datenpakets gesendet. Dies erleichtert dem Empfänger zusätzlich die Erkennung des Endes eines Datenpakets innerhalb eines Datenframes.

Gemäß einer bevorzugten Ausgestaltung der Erfindung wird der mindestens eine Datenframe als Lichtstrom übertragen. Ein Lichtstrom ist besonders EMV-verträglich und erzeugt insbesondere keine Funksignale, welche störende Einflüsse auf andere Datenübertragungseinrichtungen, wie beispielsweise WLAN-Antennen, haben können.

Ein erfindungsgemäßes System zur Übertragung von Daten umfasst einen Sender zum Senden von Daten und einen Empfänger zum Empfangen von Daten. Dabei ist das erfindungsgemäß System zur Ausführung des erfindungsgemäßen Verfahrens eingerichtet.

Das erfindungsgemäße System gestattet, Daten, die von dem Sender zu dem Empfänger übertragen werden und dabei verloren gehen, zu rekonstruieren. Ein Datenverlust bei der Übertragung von Daten ist somit vorteilhaft vermieden.

Vorteilhaft ist eine Zeitspanne, in welcher eines der Datenpakete des mindestens einen Datenframes von dem Sender gesendet wird, mindestens so lang wie eine Pausenzeit des Empfängers. Insbesondere, wenn es sich bei dem Empfänger um eine Kamera mit einem Bildsensor handelt, welcher mittels des Rolling-Shutter-Effekts arbeitet und eine Pausenzeit aufweist, sind Daten, die während der Pausenzeit des Empfängers übertragen werden, für den Empfänger trotzdem verfügbar.

Gemäß einer bevorzugten Ausgestaltung der Erfindung weist der Sender eine Lichtquelle auf, und der Empfänger weist einen Bildsensor auf. Vorteilhaft ist somit der mindestens eine Datenframe als Lichtstrom übertragbar. Ein Lichtstrom ist besonders EMV-verträglich und erzeugt insbesondere keine Funksignale, welche störende Einflüsse auf andere Datenübertragungseinrichtungen, wie beispielsweise WLAN-Antennen, haben können.

Gemäß einer vorteilhaften Weiterbildung der Erfindung weist der Empfänger eine Lentikularfolie auf, welche zwischen der Lichtquelle des Senders und dem Bildsensor angeordnet ist. Die Lentikularfolie bewirkt, dass ein von der Lichtquelle gesendeter Lichtstahl nicht punktförmig, sondern streifenförmig auf dem Bildsensor des Empfängers abgebildet wird. Ein Bildsensor, welcher mittels des Rolling-Shutter-Effekts arbeitet, wird zeilenweise abgetastet. Ein Datenstrom mit einem Datenframe ist dabei mit einer größeren Datenübertragungsrate detektierbar als eine Bildfrequenz der Kamera des Empfängers.

Gemäß einer vorteilhaften Ausgestaltung der Erfindung ist der Sender als elektronisches Gerät, insbesondere als Frequenzumrichter, ausgebildet, und weist eine steuerbare Lichtquelle, insbesondere eine LED, auf.

Gemäß einer weiteren vorteilhaften Ausgestaltung der Erfindung ist der Sender als Fahrzeug, insbesondere als autonom fahrendes Fahrzeug, ausgebildet, und weist eine steuerbare Lichtquelle, insbesondere eine LED, auf.

Gemäß einer vorteilhaften Weiterbildung der Erfindung ist der Empfänger als Mobiltelefon ausgebildet und umfasst eine Kamera, welche einen Bildsensor aufweist.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung eines Systems zur Übertragung von Daten,
- Figur 2:: eine schematische Darstellung eines von einem Sender gesendeten Datenstroms und
- Figur 3:: eine schematische Darstellung eines von einem Empfänger empfangenen Datenstroms.

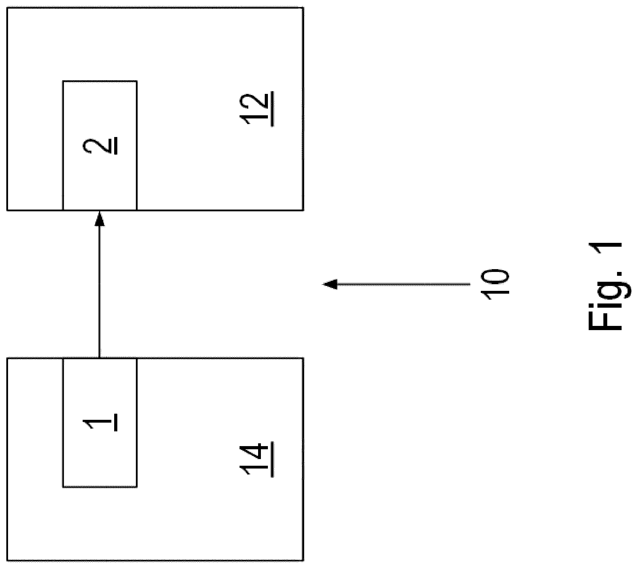

Figur 1 zeigt eine schematische Darstellung eines Systems 10 zur Übertragung von Daten. Das System 10 zur Übertragung von Daten umfasst einen Sender 14, welcher eine steuerbare Lichtquelle 1 aufweist. Der Sender 14 ist beispielweise ein elektronisches Gerät, insbesondere ein Frequenzumrichter, oder ein Fahrzeug, insbesondere ein autonom fahrendes Fahrzeug. Bei der Lichtquelle 1 handelt es sich beispielsweise um eine LED, mittels welcher der Sender 14 Daten in Form eines Lichtstroms sendet. Auch ist es denkbar, dass der Sender 14 eine Deckenlampe ist und die Lichtquelle 1 ein zugehöriges Leuchtmittel.

Das System 10 zur Übertragung von Daten umfasst ferner einen Empfänger 12. Der Empfänger 12 umfasst eine Kamera, welche einen Bildsensor 2 aufweist. Der Bildsensor 2 arbeitet mittels des Rolling-Shutter-Effekts. Der Empfänger 12 ist beispielsweise ein handelsübliches Mobiltelefon oder Smartphone. Mittels des Systems 10 sind Daten als Lichtstrom von dem Sender 14 zu dem Empfänger 12 übertragbar. Optional weist der Empfänger 12 eine Lentikularfolie auf, welche zwischen der Lichtquelle 1 des Senders 14 und dem Bildsensor 2 angeordnet ist.

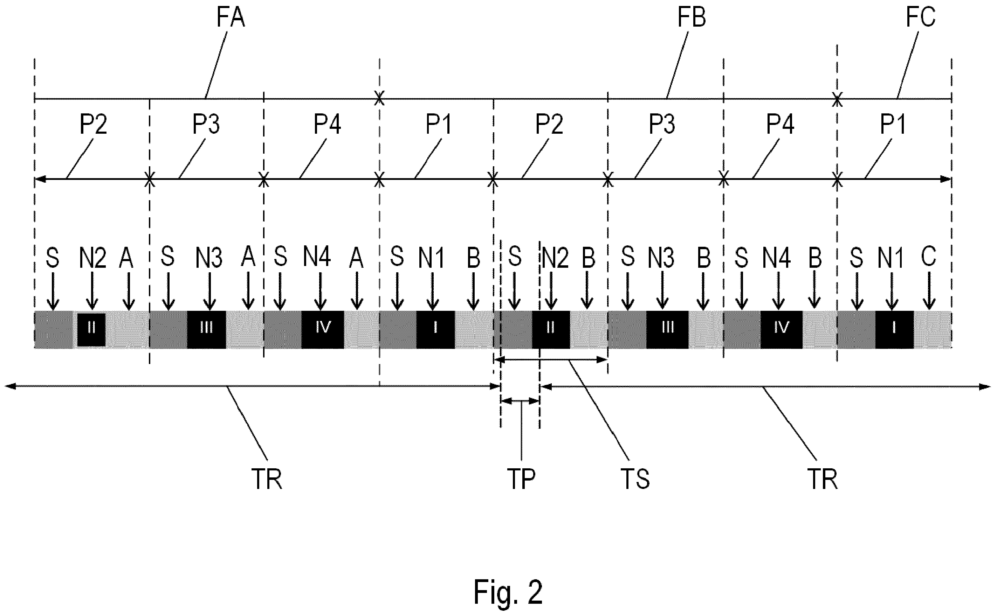

Figur 2 zeigt eine schematische Darstellung eines von einem Sender 14 gesendeten Datenstroms. Der Datenstrom umfasst einen ersten Datenframe FA, einen zweiten Datenframe FB und einen dritten Datenframe FC, welche zeitlich nacheinander gesendet werden. Jeder Datenframe FA, FB, FC umfasst vorliegend ein erstes Datenpaket P1, ein zweites Datenpaket P2, ein drittes Datenpaket P3 und ein viertes Datenpaket P4, welche zeitlich nacheinander gesendet werden. Jedes der Datenpakete P1, P2, P3, P4 wird in einer gleichen Zeitspanne TS gesendet.

Der Empfänger 12 weist abwechselnd je eine Aufnahmezeit TR und eine Pausenzeit TP auf. Während der Aufnahmezeit TR ist ein Empfang von Daten möglich, während der Pausenzeit TP ist ein Empfang von Daten nicht möglich. Daten, die während der Pausenzeit TP zu dem Empfänger 12 übertragen werden, können somit nicht empfangen werden, sondern gehen verloren. Die Zeitspanne TS, in welcher ein Datenpaket P1, P2, P3, P4 von dem Sender 14 gesendet wird, ist größer als die Pausenzeit TP des Empfängers 12.

Jedes Datenpaket P1, P2, P3, P4 von jedem Datenframe FA, FB, FC umfasst jeweils eine Startsequenz S, welche eine definierte Folge von Startbits aufweist, eine Paketnummer N1, N2, N3, N4 und ein Telegramm A, B, C. Die Startsequenz S ist bei allen Datenpaketen P1, P2, P3, P4 von allen Datenframes FA, FB, FC gleich und wird zeitlich vor der Paketnummer N1, N2, N3, N4 des Datenpakets P1, P2, P3, P4 und zeitlich vor dem Telegramm A, B, C des Datenpakets P1, P2, P3, P4 gesendet. Optional umfasst jedes Datenpaket P1, P2, P3, P4 zusätzlich eine Stopsequenz, welche eine definierte Folge von Stopbits aufweist. Die Stopsequenz ist bei allen Datenpaketen P1, P2, P3, P4 von allen Datenframes FA, FB, FC gleich und wird zeitlich nach der Paketnummer N1, N2, N3, N4 des Datenpakets P1, P2, P3, P4 und zeitlich nach dem Telegramm A, B, C des Datenpakets P1, P2, P3, P4 gesendet.

Das erste Datenpaket P1 jedes Datenframes FA, FB, FC umfasst eine erste Paketnummer N1, vorliegend "I". Das zweite Datenpaket P2 jedes Datenframes FA, FB, FC umfasst eine zweite Paketnummer N2, vorliegend "II". Das dritte Datenpaket P3 jedes Datenframes FA, FB, FC umfasst eine dritte Paketnummer N3, vorliegend "Ill". Das vierte Datenpaket P4 jedes Datenframes FA, FB, FC umfasst eine vierte Paketnummer N4, vorliegend "IV". Die Paketnummern N1, N2, N3, N4 der Datenpakete P1, P2, P3, P4 eines Datenframes FA, FB, FC sind vorliegend fortlaufend.

Jedes Datenpaket P1, P2, P3, P4 des ersten Datenframes FA umfasst ein erstes Telegramm A. Jedes Datenpaket P1, P2, P3, P4 des zweiten Datenframes FB umfasst ein zweites Telegramm B. Jedes Datenpaket P1, P2, P3, P4 des dritten Datenframes FC umfasst ein drittes Telegramm C. Die Telegramme A, B, C der Datenpakete P1, P2, P3, P4 innerhalb eines Datenframes FA, FB, FC sind also identisch.

Vorliegend tritt die Pausenzeit TP des Empfängers 12 auf, während das zweite Datenpaket P2 des zweiten Datenframes FB von dem Sender 14 gesendet wird. Das zweite Datenpaket P2 des zweiten Datenframes FB kann somit von dem Empfänger 14 nicht empfangen werden, sondern geht verloren.

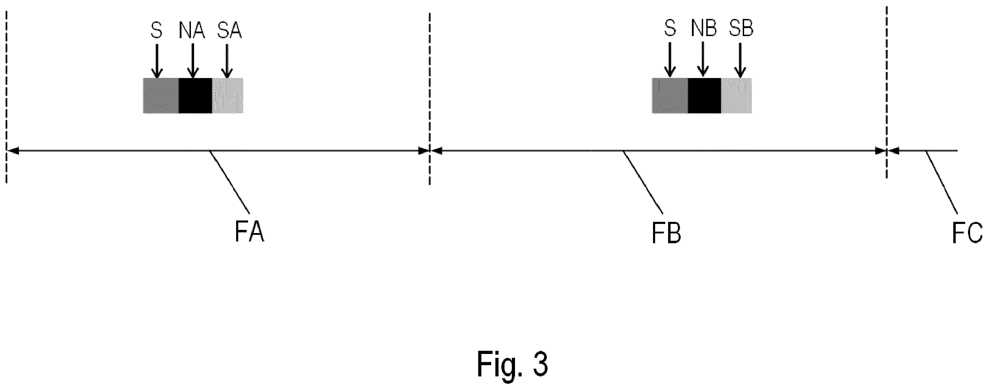

Figur 3 zeigt eine schematische Darstellung eines von einem Empfänger 12 empfangenen Datenstroms. Dabei handelt es sich um den in Figur 1 dargestellten Datenstrom, der von dem Sender 14 gesendet wird.

Vorliegend wurden von dem Empfänger 12 alle Datenpakete P1, P2, P3, P4, also vier, des ersten Datenframes FA vollständig empfangen.

Die Paketnummern N1, N2, N3, N4 der vollständig empfangenen Datenpakete P1, P2, P3, P4 des ersten Datenframes FA werden zu einer ersten Nummernsumme NA des ersten Datenframes FA addiert. Aus der ersten Nummernsumme NA wird von dem Empfänger 12 eine Anzahl der vollständig empfangenen Datenpakete P1, P2, P3, P4 des ersten Datenframes FA ermittelt. Vorliegend ist die besagte Anzahl gleich vier.

Die ersten Telegramme A der Datenpakete P1, P2, P3, P4 des ersten Datenframes FA werden zu einer ersten Telegrammsumme SA des ersten Datenframes FA addiert. Die erste Telegrammsumme TA des ersten Datenframes FA wird anschließend durch die ermittelte Anzahl, also vier, dividiert.

Vorliegend wurden von dem Empfänger 12 das erste Datenpaket P1, das dritte Datenpaket P3 und das vierte Datenpaket P4 des zweiten Datenframes FB, also drei, vollständig empfangen. Das zweite Datenpaket P2 des zweiten Datenframes FB ist nicht empfangen worden, sondern verloren gegangen.

Die Paketnummern N1, N3, N4 der vollständig empfangenen Datenpakete P1, P3, P4 des zweiten Datenframes FB werden zu einer zweiten Nummernsumme NB des zweiten Datenframes FB addiert. Aus der zweiten Nummernsumme NB wird von dem Empfänger 12 eine Anzahl der vollständig empfangenen Datenpakete P1, P3, P4 des zweiten Datenframes FB ermittelt. Vorliegend ist die besagte Anzahl gleich drei.

Die zweiten Telegramme B der Datenpakete P1, P3, P4 des zweiten Datenframes FB werden zu einer zweiten Telegrammsumme SB des zweiten Datenframes FB addiert. Die zweite Telegrammsumme TB des zweiten Datenframes FB wird anschließend durch die ermittelte Anzahl, also drei, dividiert.

Ferner wurden von dem Empfänger 12 eine Mehrzahl von Datenpaketen P1, P2, P3, P4 des dritten Datenframes FC vollständig empfangen.

Die Paketnummern N1, N2, N3, N4 der vollständig empfangenen Datenpakete P1, P2, P3, P4 des dritten Datenframes FC werden zu einer hier nicht dargestellten dritten Nummernsumme NC des dritten Datenframes FC addiert. Aus der dritten Nummernsumme NC wird von dem Empfänger 12 eine Anzahl der vollständig empfangenen Datenpakete P1, P2, P3, P4 des dritten Datenframes FC ermittelt. Vorliegend ist die besagte Anzahl zwischen zwei und vier.

Die dritten Telegramme C der vollständig empfangenen Datenpakete P1, P2, P3, P4 des dritten Datenframes FC werden zu einer hier nicht dargestellten dritten Telegrammsumme SC des dritten Datenframes FC addiert. Die dritte Telegrammsumme TC des dritten Datenframes FC wird anschließend durch die ermittelte Anzahl dividiert.

### Bezugszeichenliste

- 1: Lichtquelle
- 2: Bildsensor
- 10: System
- 12: Empfänger
- 14: Sender
- A: erstes Telegramm
- B: zweites Telegramm
- C: drittes Telegramm
- FA: erster Datenframe
- FB: zweiter Datenframe
- FC: dritter Datenframe
- N1: erste Paketnummer
- N2: zweite Paketnummer
- N3: dritte Paketnummer
- N4: vierte Paketnummer
- NA: erste Nummernsumme
- NB: zweite Nummernsumme
- NC: dritte Nummernsumme
- P1: erstes Datenpaket
- P2: zweites Datenpaket
- P3: drittes Datenpaket
- P4: viertes Datenpaket
- S: Startsequenz
- SA: erste Telegrammsumme
- SB: zweite Telegrammsumme
- SC: dritte Telegrammsumme
- TP: Pausenzeit
- TR: Aufnahmezeit
- TS: Zeitspanne

## Patentansprüche

1. Verfahren zur bitweisen Übertragung von Daten von einem Sender (14) zu einem Empfänger (12),
wobei
von dem Sender (14) mindestens ein Datenframe (FA, FB, FC) gesendet wird, welcher eine Mehrzahl von Datenpaketen (P1, P2, P3, P4) umfasst, wobei
jedes Datenpaket (P1, P2, P3, P4) eine Paketnummer (N1, N2, N3, N4) und ein Telegramm (A, B, C) umfasst, wobei
die Paketnummern (N1, N2, N3, N4) der Datenpakete (P1, P2, P3, P4) des mindestens einen Datenframes (FA, FB, FC) voneinander unterschiedlich sind, und wobei
die Telegramme (A, B, C) der Datenpakete (P1, P2, P3, P4) des mindestens einen Datenframes (FA, FB, FC) identisch sind, und wobei
von dem Empfänger (12) eine Mehrzahl von Datenpaketen (P1, P2, P3, P4) des mindestens einen Datenframes (FA, FB, FC) vollständig empfangen wird,
**dadurch gekennzeichnet, dass**
die Telegramme (A, B, C) der vollständig empfangenen Datenpakete (P1, P2, P3, P4) des mindestens einen Datenframes (FA, FB, FC) zu einer Telegrammsumme (SA, SB, SC) des mindestens einen Datenframes (FA, FB, FC) bitweise addiert werden,
von dem Empfänger (12) eine Anzahl der vollständig empfangenen Datenpakete (P1, P2, P3, P4) des mindestens einen Datenframes (FA, FB, FC) ermittelt wird, und dass
die Telegrammsumme (SA, SB, SC) des mindestens einen Datenframes (FA, FB, FC) durch die ermittelte Anzahl zur Normierung bitweise dividiert wird, und dass
jedes der Datenpakete (P1, P2, P3, P4) in einer gleichen Zeitspanne (TS) gesendet wird.

2. Verfahren nach einem der vorangegangenen Ansprüche,
**dadurch gekennzeichnet, dass**
die Paketnummern (N1, N2, N3, N4) der vollständig empfangenen Datenpakete (P1, P2, P3, P4) des mindestens einen Datenframes (FA, FB, FC) zu einer Nummernsumme (NA, NB, NC) des mindestens einen Datenframes (FA, FB, FC) addiert werden.

3. Verfahren nach mindestens einem der vorangegangenen Ansprüche,
**dadurch gekennzeichnet, dass**
die Paketnummern (N1, N2, N3, N4) der Datenpakete (P1, P2, P3, P4) des mindestens einen Datenframes (FA, FB, FC) fortlaufend sind.

4. Verfahren nach mindestens einem der vorangegangenen Ansprüche,
**dadurch gekennzeichnet, dass**
jedes Datenpaket (P1, P2, P3, P4) des mindestens einen Datenframes (FA, FB, FC) eine Startsequenz (S) umfasst, welche mindestens ein Startbit aufweist, wobei
die Startsequenzen (S) der Datenpakete (P1, P2, P3, P4) des mindestens einen Datenframes (FA, FB, FC) identisch sind.

5. Verfahren nach Anspruch 4, **dadurch gekennzeichnet, dass**
die Startsequenz (S) eines Datenpakets (P1, P2, P3, P4) zeitlich vor der Paketnummer (N1, N2, N3, N4) des Datenpakets (P1, P2, P3, P4) und/oder zeitlich vor dem Telegramm (A, B, C) des Datenpakets (P1, P2, P3, P4) gesendet wird.

6. Verfahren nach mindestens einem der vorangegangenen Ansprüche,
**dadurch gekennzeichnet, dass**
jedes Datenpaket (P1, P2, P3, P4) des mindestens einen Datenframes (FA, FB, FC) eine Stopsequenz umfasst, welche mindestens ein Stopbit aufweist, wobei
die Stopsequenzen der Datenpakete (P1, P2, P3, P4) des mindestens einen Datenframes (FA, FB, FC) identisch sind.

7. Verfahren nach Anspruch 6, **dadurch gekennzeichnet, dass**
die Stopsequenz eines Datenpakets (P1, P2, P3, P4) zeitlich nach der Paketnummer (N1, N2, N3, N4) des Datenpakets (P1, P2, P3, P4) und/oder zeitlich nach dem Telegramm (A, B, C) des Datenpakets (P1, P2, P3, P4) gesendet wird.

8. Verfahren nach mindestens einem der vorangegangenen Ansprüche,
**dadurch gekennzeichnet, dass**
der mindestens eine Datenframe (FA, FB, FC) als Lichtstrom übertragen wird.

9. System (10) zur Übertragung von Daten, umfassend
einen Sender (14) zum Senden von Daten und
einen Empfänger (12) zum Empfangen von Daten, wobei
das System zur Ausführung des Verfahrens nach mindestens einem der vorangegangenen Ansprüche eingerichtet ist.

10. System (10) nach Anspruch 9, **dadurch gekennzeichnet, dass**
eine Zeitspanne (TS), in welcher eines der Datenpakete (P1, P2, P3, P4) des mindestens einen Datenframes (FA, FB, FC) von dem Sender (14) gesendet wird, mindestens so lang wie eine Pausenzeit (TP) des Empfängers (12) ist.

11. System (10) nach einem der Ansprüche 9 bis 10, **dadurch gekennzeichnet, dass**
der Sender (14) eine Lichtquelle (1) aufweist, und dass
der Empfänger (12) einen Bildsensor (2) aufweist.

12. System (10) nach Anspruch 11, **dadurch gekennzeichnet, dass**
der Empfänger (12) eine Lentikularfolie aufweist, welche
zwischen der Lichtquelle (1) des Senders (14) und dem Bildsensor (2) angeordnet ist.

## Claims

1. Method for transmitting bitwise data from a transmitter (14) to a receiver (12),
the transmitter (14) sending at least one data frame (FA, FB, FC) which comprises a plurality of data packets (P1, P2, P3, P4),
each data packet (P1, P2, P3, P4) comprising a packet number (N1, N2, N3, N4) and a telegram (A, B, C),
the packet numbers (N1, N2, N3, N4) of the data packets (P1, P2, P3, P4) of the at least one data frame (FA, FB, FC) being different from one another, and
the telegrams (A, B, C) of the data packets (P1, P2, P3, P4) of the at least one data frame (FA, FB, FC) being identical, and
a plurality of data packets (P1, P2, P3, P4) of the at least one data frame (FA, FB, FC) being received by the receiver (12) in their entirety,
**characterised in that**
the telegrams (A, B, C) of the entirely received data packets (P1, P2, P3, P4) of the at least one data frame (FA, FB, FC) are added together bit by bit to form a telegram sum (SA, SB, SC) of the at least one data frame (FA, FB, FC),
the receiver (12) establishes a number of entirely received data packets (P1, P2, P3, P4) of the at least one data frame (FA, FB, FC), and **in that**
the telegram sum (SA, SB, SC) of the at least one data frame (FA, FB, FC) is divided by the established number bit by bit for the purpose of standardisation, and **in that**
each of the data packets (P1, P2, P3, P4) is sent in the same time period (TS).

2. Method according to any of the preceding claims,
**characterised in that**
the packet numbers (N1, N2, N3, N4) of the entirely received data packets (P1, P2, P3, P4) of the at least one data frame (FA, FB, FC) are added together to form a number sum (NA, NB, NC) of the at least one data frame (FA, FB, FC).

3. Method according to at least one of the preceding claims,
**characterised in that**
the packet numbers (N1, N2, N3, N4) of the data packets (P1, P2, P3, P4) of the at least one data frame (FA, FB, FC) are continuous.

4. Method according to at least one of the preceding claims,
**characterised in that**
each data packet (P1, P2, P3, P4) of the at least one data frame (FA, FB, FC) comprises a start sequence (S) which has at least one start bit,
the start sequences (S) of the data packets (P1, P2, P3, P4) of the at least one data frame (FA, FB, FC) being identical.

5. Method according to claim 4,
**characterised in that**
the start sequence (S) of a data packet (P1, P2, P3, P4) is sent before the packet number (N1, N2, N3, N4) of the data packet (P1, P2, P3, P4) and/or before the telegram (A, B, C) of the data packet (P1, P2, P3, P4).

6. Method according to at least one of the preceding claims,
**characterised in that**
each data packet (P1, P2, P3, P4) of the at least one data frame (FA, FB, FC) comprises a stop sequence which has at least one stop bit,
the stop sequences of the data packets (P1, P2, P3, P4) of the at least one data frame (FA, FB, FC) being identical.

7. Method according to claim 6,
**characterised in that**
the stop sequence of a data packet (P1, P2, P3, P4) is sent after the packet number (N1, N2, N3, N4) of the data packet (P1, P2, P3, P4) and/or after the telegram (A, B, C) of the data packet (P1, P2, P3, P4).

8. Method according to at least one of the preceding claims,
**characterised in that**
the at least one data frame (FA, FB, FC) is transmitted as a light flux.

9. System (10) for transmitting data, comprising
a transmitter (14) for sending data and
a receiver (12) for receiving data, wherein
the system is configured for carrying out the method according to at least one of the preceding claims.

10. System (10) according to claim 9,
**characterised in that**
a time period (TS) in which one of the data packets (P1, P2, P3, P4) of the at least one data frame (FA, FB, FC) is sent by the transmitter (14) is at least as long as a rest period (TP) of the receiver (12).

11. System (10) according to any of claims 9 to 10,
**characterised in that**
the transmitter (14) has a light source (1), and **in that**
the receiver (12) has an image sensor (2).

12. System (10) according to claim 11,
**characterised in that**
the receiver (12) has a lenticular film which is arranged between the light source (1) of the transmitter (14) and the image sensor (2).

## Revendications

1. Procédé de transmission de données bit á bit depuis un émetteur (14) vers un récepteur (12),
au moins une trame de données (FA, FB, FC) comprenant une pluralité de paquets de données (P1, P2, P3, P4) étant envoyée par l'émetteur (14),
chaque paquet de données (P1, P2, P3, P4) comprenant un numéro de paquet (N1, N2, N3, N4) et un télégramme (A, B, C),
les numéros de paquets (N1, N2, N3, N4) des paquets de données (P1, P2, P3, P4) de la au moins une trame de données (FA, FB, FC) étant différents les uns des autres, et
les télégrammes (A, B, C) des paquets de données (P1, P2, P3, P4) de la au moins une trame de données (FA, FB, FC) étant identiques, et
- une pluralité de paquets de données (P1, P2, P3, P4) de la au moins une trame de données (FA, FB, FC) étant entièrement reçus par le récepteur (12),
**caractérisé en ce que**
les télégrammes (A, B, C) des paquets de données (P1, P2, P3, P4) entièrement reçus de la au moins une trame de données (FA, FB, FC) sont ajoutés bit par bit à une somme de télégrammes (SA, SB, SC) de la au moins une trame de données (FA, FB, FC),
le nombre des paquets de données (P1, P2, P3, P4) entièrement reçus de la au moins une trame de données (FA, FB, FC) est déterminé par le récepteur (12), et la somme de télégrammes (SA, SB, SC) de la au moins une trame de données (FA, FB, FC) est divisée bit par bit par le nombre déterminé, en vue d'une normalisation, et **en ce que** chacun des paquets de données (P1, P2, P3, P4) est envoyé dans une même période de temps (TS).

2. Procédé selon l'une quelconque des revendications précédentes,
**caractérisé en ce que**
les numéros de paquets (N1, N2, N3, N4) des paquets de données (P1, P2, P3, P4) entièrement reçus de la au moins une trame de données (FA, FB, FC) sont ajoutés à une somme de numéros (NA, NB, NC) de la au moins une trame de données (FA, FB, FC).

3. Procédé selon au moins l'une quelconque des revendications précédentes,
**caractérisé en ce que**
les numéros de paquets (N1, N2, N3, N4) des paquets de données (P1, P2, P3, P4) de la au moins une trame de données (FA, FB, FC) sont continus.

4. Procédé selon au moins l'une quelconque des revendications précédentes,
**caractérisé en ce que**
chaque paquet de données (P1, P2, P3, P4) de la au moins une trame de données (FA, FB, FC) comprend une séquence de démarrage (S) qui présente au moins un bit de démarrage,
les séquences de démarrage (S) des paquets de données (P1, P2, P3, P4) de la au moins une trame de données (FA, FB, FC) étant identiques.

5. Procédé selon la revendication 4, **caractérisé en ce que**
la séquence de démarrage (S) d'un paquet de données (P1, P2, P3, P4) est envoyée temporellement avant le numéro de paquet (N1, N2, N3, N4) du paquet de données (P1, P2, P3, P4) et/ou temporellement avant le télégramme (A, B, C) du paquet de données (P1, P2, P3, P4).

6. Procédé selon au moins l'une quelconque des revendications précédentes,
**caractérisé en ce que**
chaque paquet de données (P1, P2, P3, P4) de la au moins une trame de données (FA, FB, FC) comprend une séquence d'arrêt qui présente au moins un bit d'arrêt,
les séquences d'arrêt des paquets de données (P1, P2, P3, P4) de la au moins une trame de données (FA, FB, FC) étant identiques.

7. Procédé selon la revendication 6, **caractérisé en ce que**
la séquence d'arrêt d'un paquet de données (P1, P2, P3, P4) est envoyée temporellement après le numéro de paquet (N1, N2, N3, N4) du paquet de données (P1, P2, P3, P4) et/ou temporellement après le télégramme (A, B, C) du paquet de données (P1, P2, P3, P4).

8. Procédé selon au moins l'une quelconque des revendications précédentes,
**caractérisé en ce que**
la au moins une trame de données (FA, FB, FC) est transmise sous forme de flux lumineux.

9. Système (10) de transmission de données, comprenant
un émetteur (14) permettant d'envoyer des données et
un récepteur (12) permettant de recevoir des données,
le système étant conçu pour mettre en œuvre le procédé selon au moins l'une quelconque des revendications précédentes.

10. Système (10) selon la revendication 9, **caractérisé en ce que**
une période (TS), pendant laquelle un des paquets de données (P1, P2, P3, P4) de la au moins une trame de données (FA, FB, FC) est envoyé par l'émetteur (14), est au moins aussi longue qu'un temps de pause (TP) du récepteur (12).

11. Système (10) selon l'une quelconque des revendications 9 à 10, **caractérisé en ce que**
l'émetteur (14) présente une source de lumière (1), et **en ce que**
le récepteur (12) présente un capteur d'image (2).

12. Système (10) selon la revendication 11, **caractérisé en ce que**
le récepteur (12) présente une feuille lenticulaire qui
est agencé entre la source de lumière (1) de l'émetteur (14) et le capteur d'image (2).
